(19) Europäisches Patentamt
European Patent Office
Office européen des brevets

(11) Veröffentlichungsnummer: 0 224 042
A2

(12) # EUROPÄISCHE PATENTANMELDUNG

(21) Anmeldenummer: 86114737.9

(22) Anmeldetag: 23.10.86

(51) Int. Cl.⁴: C 08 G 59/50
C 09 D 3/58, C 09 D 5/44

(30) Priorität: 30.10.85 DE 3538548

(43) Veröffentlichungstag der Anmeldung:
03.06.87 Patentblatt 87/23

(84) Benannte Vertragsstaaten:
AT BE DE FR GB IT NL SE

(71) Anmelder: HOECHST AKTIENGESELLSCHAFT
Postfach 80 03 20
D-6230 Frankfurt am Main 80(DE)

(72) Erfinder: Kiessling, Hans-Joachim, Dr.
Eppenhainer Weg 20a
D-6239 Eppstein/Taunus(DE)

(54) **Verfahren zur Herstellung von löslichen, von monomeren Aminen freien Kunstharzen mit NH-Bindungen und deren Verwendung.**

(57) Verfahren zur Herstellung von löslichen, von monomeren Aminen freien Kunstharzen mit NH-Bindungen durch Umsetzung von A) epoxidgruppentragenden Verbindungen mit B) Polyaminen, bei dem die Umsetzung in homogener Phase in Abwesenheit oder Gegenwart von Harzlösemitteln durchgeführt wird, wobei B) Polyamin im Überschuß eingesetzt wird und das erhaltene Reaktionsprodukt von den nicht umgesetzten Polyaminanteilen durch Kreislaufdestillation in Gegenwart eines Harzlösemittels unter Wasserzugabe und Wärmezufuhr befreit wird. Die so hergestellten Kunstharze werden als selbstvernetzende Bindemittel sowie in Kombination mit Vernetzern oder in modifizierter Form für Beschichtungen oder Imprägnierungen eingesetzt.

EP 0 224 042 A2

Croydon Printing Company Ltd

# Verfahren zur Herstellung von löslichen, von monomeren Aminen freien Kunstharzen mit NH-Bindungen und deren Verwendung

Lösliche, von monomeren Aminen freie Kunstharze mit NH-Bindungen besitzen als vernetzbare Bindemittel für Überzüge und Imprägnierungen erhebliches technisches Interesse, da durch Salzbildung an den basischen funktionellen Gruppen wasserverdünnbare Systeme aufgebaut werden können und außerdem die hohe Reaktivität der NH-Bindungen für Vernetzungsrekationen zur Verfügung steht. Monomere Aminverbindungen, die als Verunreinigungen solcher Kunstharze mit NH-Bindungen meistens bei der Herstellung in das System gelangen, mindern die Bindemittelqualität einmal hinsichtlich Geruch, Toxizität und zum anderen, insbesondere bei wäßrigen Systemen nach der Protonisierung, durch Bildung niedermolekularer Aminsalze, so daß bei Verwendung als Kataphorese-Bindemittel die Leitfähigkeit des Kataphoresebades unerwünscht beeinflußt wird.

Kunstharze mit NH-Bindungen können im allgemeinen nach zwei Verfahren hergestellt werden, nämlich durch Umsetzung von epoxidgruppentragenden Harzen mit Polyaminketiminen oder mit Polyaminen im Überschuß. In der DE-OS 2 737 375 wird die Umsetzung von Epoxidharzen mit Polyaminen im Überschuß beschrieben. Nach diesem Verfahren erhält man jedoch keine von monomeren Aminen freien Kunstharze. Entsprechend den Angaben setzt man Polyepoxidharze, die von zweiwertigen Phenolen, z.B. Bisphenol A und Epichlorhydrin, abgeleitet sind, mit einem Polyamin um, das mindestens zwei Aminstickstoffatome und mindestens 3 Aminwasserstoffbindungen pro Molekül aufweist, vorzugsweise Triethylentetramin, wobei für jede Epoxidgruppe im Epoxidharz mindestens 1,5 Mol Polyamin, vorzugsweise 10 Mol Polyamin, angewendet und das nicht umgesetzte Polyamin abdestilliert wird. Bei diesem bekannten Verfahren erhält man lösliche Kunstharze mit NH-Bindungen, die jedoch dunkelgelb bis braun gefärbt sind und noch 3000 bis 20000 ppm freies Polyamin enthalten.

Lösliche, von Monomeren praktisch freie, harzartige Polymerisate mit primären und/oder sekundären Aminogruppen sind aus der DE-OS 34 12 657 bekannt. Ihre Herstellung erfolgt durch Umsetzung von Copolymeren auf Basis Glycidylmethacrylat mit NH-Bindungen enthaltenden Verbindungen in homogener Phase, wobei der Überschuß an NH-Verbindungen nach der Umsetzung destillativ entfernt wird. Dabei fallen aber größere Quantitäten des als Schleppmittel benutzten Harzlösemittels an, die mit kleinen Aminmengen verunreinigt sind und zur Wiedergewinnung umständlich gereinigt werden müssen.

Es war daher erwünscht, ein Verfahren zu besitzen, das den Anfall größerer Mengen verunreinigter Lösemittel vermeidet und dadurch Wiederaufbereitungs- oder Abfallbeseitigungsoperationen unnötig macht und somit auch umweltschonend ist.

Gegenstand der Erfindung ist ein Verfahren zur Herstellung von löslichen, von monomeren Aminen freien Kunstharzen mit NH-Bindungen durch Umsetzung von A) epoxidgruppentragenden Verbindungen mit B) Polyaminen, bei dem die Umsetzung in homogener Phase in Abwesenheit oder Gegenwart von Harzlösemitteln durchgeführt wird, wobei B) Polyamin im Überschuß eingesetzt wird und das erhaltene Reaktionsprodukt von den nicht umgesetzten Polyaminanteilen durch Kreislaufdestillation in Gegenwart eines Harzlösemittels unter Wasserzugabe und Wärmezufuhr befreit wird.

Mit dem erfindungsgemäßen Verfahren lassen sich hellfarbige bis farblose Produkte herstellen, die weniger als 1000 ppm, vorzugsweise weniger als 300 ppm, freies, nicht gebundenes Polyamin enthalten. Nach dem erfindungsgemäßen Verfahren werden die epoxidgruppentragenden Verbindungen mit den Polyaminen in homogener Phase umgesetzt. Grundsätzlich kann diese Reaktion zwar auch in nichthomogener Phase erfolgen; jedoch kann hierbei partielle oder vollständige Vernetzung des löslichen Kunstharzes eintreten. Je nach den Löslichkeitsparametern der epoxidgruppentragenden Verbindungen

und dem Lösungsvermögen des Polyamins kann man die homogene Phase durch Anwendung eines größeren Überschusses an Polyaminen oder durch Verwendung eines geeigneten Lösemittels erreichen. Dienen die Polyamine bei der Umsetzung gleichzeitig als Lösemittel für die Epoxidgruppen tragende Verbindung, so wird man zweckmäßig einen größeren Überschuß an Polyaminen wählen, so daß das Äquivalenzverhältnis zwischen den NH-Bindungen des Polyamins und den Glycidylgruppen im epoxidgruppentragenden Kunstharz in diesem Fall wesentlich größer als 12 : 1 sein kann. Für die Polyaminumsetzung zwischen den NH-Bindungen im Polyamin einerseits und den Glycidylgruppen ( 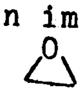 ) im Kunstharz andererseits ist ein Mindest-Äquivalenzverhältnis erforderlich, und zwar ein Überschuß an NH-Bindungen. Dieses Verhältnis ist abhängig von dem Glycidylgruppengehalt und dem Molekulargewicht des Kunstharzes, der Anzahl der NH-Bindungen in der Polyaminverbindung, wird aber auch vom Festkörpergehalt der umzusetzenden Kunstharzlösung beeinflußt und beträgt 8 : 1, vorzugsweise mindestens 12 : 1 und höchstens 36 : 1. Bei Polyaminen mit 4 NH-Bindungen wie Ethylendiamin wird zweckmäßig ein NH/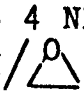 -Verhältnis von mindestens 8 : 1 gewählt, während Polyamine mit 5 NH-Bindungen im Molekül wie Diethylentriamin eher mit einem noch größeren Überschuß, d.h. in einem NH/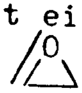 -Verhältnis von mindestens 10 : 1 eingesetzt werden.

Die epoxidgruppentragenden Verbindungen liegen als 100 %ige Harze oder als Harzlösungen vor, wobei der Festkörpergehalt der Harzlösungen 20 bis 90 Gew.-% betragen kann. Bei der Polyaminumsetzung sollte die Harzkonzentration zweckmäßig umso niedriger gewählt werden, je mehr NH-Bindungen das Polyamin enthält und je geringer das angewandte NH/ -Verhältnis ist.

Die Mindestäquivalenzverhältnisse gelten für Kunstharze mit Epoxidgruppengehalten von 10 bis 25 Gew.-% bei durchschnittlichen Molekulargewichten von 5000 bis 30000. Mit

ansteigendem durchschnittlichen Molekulargewicht und ansteigendem Gehalt an Glycidylgruppen im Copolymeren wählt man zweckmäßig im genannten Mindestäquivalent-Verhältnis Bereich relativ hohe NH/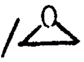 -Verhältnisse. Im Bereich der durchschnittlichen Molekulargewichte unter 5000, z.B. im Bereich 312 bis 4000, können bei Epoxidgruppengehalten von unter 10 Gew.-% die genannten Mindestäquivalentverhältnisse ohne Gelierungsgefahr unterschritten werden.

Bei dem erfindungsgemäßen Verfahren wird nach der Umsetzung des Polyamins mit den Glycidylgruppen des Kunstharzes Lösemittel als Schleppmittel zugesetzt, falls es nicht bereits in der Reaktionsmischung enthalten ist und anschließend die anfallende Reaktionsmischung erhitzt bis das Lösemittel am Rückfluß siedet und über einen Abscheider in die Reaktionsmischung zurückläuft. Anschließend wird Wasser in einer solchen Geschwindigkeit zudosiert, daß es sich in der Reaktionsmischung nicht anreichert, sondern sofort destillativ entfernt und im Abscheider abgeschieden wird. Bei Harzlösemitteln, die mit Wasser ein Azeotrop bilden, wird dies vorteilhafterweise dadurch erreicht, daß man die Reaktionsmischung mindestens 5°C, vorzugsweise über 10°C, oberhalb der Siedetemperatur des Wasser-Harz-Lösemittels-Azeotrops hält, damit das zugeführte Wasser sofort aus der Reaktionsmischung geschleppt wird. Zur Erzielung eines hohen Wasserdurchsatzes wird der Reaktionsmischung eine möglichst große Wärmemenge zugeführt und die Wasserzugabe darauf abgestimmt. Bei einer solchen Arbeitsweise kann das überschüssige Diamin in kurzer Zeit mit relativ wenig Wasser entfernt werden. Der Wasserverbrauch ist unter anderem abhängig von der Siedepunktdifferenz zwischen dem Polyamin und dem Harzlösemittel; so verringert sich z.B. die zur Entfernung von restlichem Ethylendiamin benötigte Wassermenge, wenn man statt Xylol das höhersiedene Cumol als Harzlösemittel und Schleppmittel benutzt.

Die beschriebene Kreislaufdestillation mit Wasser kann unter atmosphärischem oder vermindertem Druck durchgeführt werden. Letztere, im allgemeinen bei Temperaturen unter 100°C, vorzugsweise unter 70°C, ist zweckmäßig, wenn hellfarbige bis farblose Harze, z.B. als Deck- oder Einschichtlackbindemittel, hergestellt werden sollen.

Das Kreislaufdestillationsverfahren mit Wasser wird so lange fortgesetzt, bis 100 g des wasserfrei abdestillierten Harzlösemittels 1 bis 50 ml, vorzugsweise weniger als 10 ml, 0,1 n im allgemeinen methanolische Salzsäure verbrauchen. Die auf diese Weise erhaltenen Produkte haben keinen Amingeruch und sind praktisch frei von monomeren Polyaminresten, d.h. der Gehalt an monomerem Polyamin liegt unter 50 ppm.

Harzlösemittel, die als Schleppmittel geeignet sind, sind im allgemeinen mit Wasser nicht vollständig mischbar und sieden unter atmosphärischem Druck bei 110 bis 270°C, vorzugsweise bei 140 bis 200°C. Es sind z.B. aromatische und aliphatische Kohlenwasserstoffe, wie Toluol, Xylol, Ethylbenzol, Cumol, Tetralin, Solvesso 150 (Esso AG), Solvesso 200, vorzugsweise aber Xylole, oder alkylsubstituierte Benzole im Siedebereich von 140 bis 180°C, wie Cumol, ferner Ether mit 6 bis 12 C-Atomen, wie Dibutylether, Anisol, Diphenylether, vorzugsweise Dibutylether, einwertige Alkohole mit 4 bis 8 C-Atomen, wie Butanole, Hexanole und Etheralkohole, wie n-Butoxyl-Propanol.

Bei der Auswahl der als Schleppmittel geeigneten Harzlösemittel können auch Gemische aus den genannten Harzlösemitteln angewandt werden, wobei die Lösungsmittelauswahl vor allem von den Lösungseigenschaften der mit Polyamin umzusetzenden epoxidgruppen-tragenden Verbindung abhängt, da die Polyamin-Umsetzung in homogener Phase erfolgen sollte.

Bei der Polyamin-Umsetzung können grundsätzlich alle in den genannten organischen Lösemitteln oder in dem zur Umsetzung vorgesehenen Polyamin löslichen epoxidgruppen-

tragenden Verbindungen eingesetzt werden, die im Molekül außer der Epoxidgruppe keine labilen Bindungen, d.h. keine alkalisch leicht verseifbaren Gruppen enthalten, die zu einer Molekülaufspaltung bei der Polyaminumsetzung führen. Vorzugsweise werden bei dem erfindungsgemäßen Herstellungsverfahren Polyamin-Umsetzungsprodukte aus Epoxidharzen auf Basis von Polyphenolen und Epihalogenhydrin, vorzugsweise Epichlorhydrin sowie Glycidylmethacrylat-Copolymere, die als Comonomere Styrol, substituierte Styrole und Methacrylsäureester enthalten, eingesetzt.

Als Epoxidharze von bifunktionellen Bisphenolen (I) bzw. höher-funktionellen Phenolen (II) kommen solche mit folgenden Strukturen in Betracht:

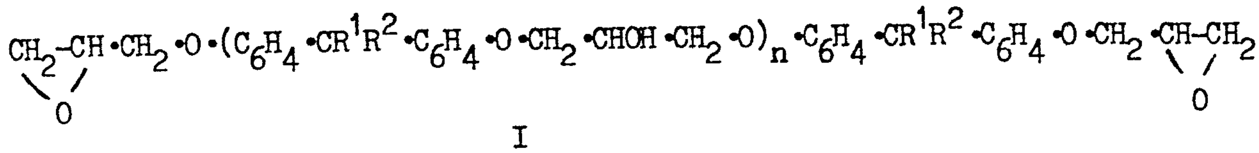

I

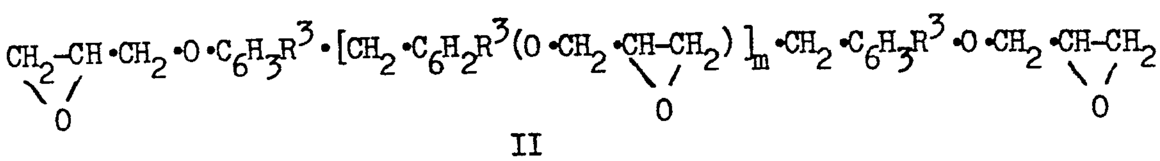

II

In den Formeln bedeuten $R^1$, $R^2$, $R^3$ Wasserstoff oder aliphatische Alkylreste mit bis zu 4 C-Atomen, vorzugsweise aber Wasserstoff oder Methylgruppen. Das durchschnittliche Molekulargewicht liegt bei Formel I zwischen 312 und 4000, vorzugsweise 900 und 2000, bei Formel II zwischen 474 und 5000, vorzugsweise zwischen 474 und 3000. Aus diesen durchschnittlichen Molekulargewichten ergeben sich unter Berücksichtigung der Substituenten $R^1$, $R^2$ und $R^3$ die Durchschnittswerte für m und n.

Epoxidverbindungen mit Strukturen der Formel I erhält man durch Umsetzung von Bisphenolen und Epihalogenhydrin, solche mit Strukturen der Formel II aus Novolaken und Epihalogenhydrin, wobei Epichlorhydrin für diese Umsetzungen bevorzugt ist.

Die für das erfindungsgemäße Verfahren geeigneten Copolymeren auf Basis von Glycidylmethacrylat haben im allgemeinen ein durchschnittliches Molgewicht von 1000 bis 100 000. Der Anteil des Glycidylmethacrylats beträgt zweckmäßig 1 bis 80, vorzugsweise 5 bis 40 Gew.-%. Sie enthalten als Comonomere z.B. Styrol, am Benzolkern substituierte Styrole wie die verschiedenen Vinyltoluole, Methacrylsäureester von Alkoholen mit 1 bis 18, vorzugsweise 1 bis 12 C-Atomen, Vinylester von in α-Stellung verzweigten Carbonsäuren, Acrylsäureamid bzw. dessen Derivate, Methacrylsäureamid bzw. dessen Derivate oder Gemische dieser Monomere. Vorzugsweise kommen Styrol, am Benzolkern substituierte Styrole und Methacrylsäureester mit 1 - 10 C-Atomen in der Estergruppe zum Einsatz. Geeignete Copolymere können auch anteilig, z.B. bis zu 30, insbesondere bis zu 10 Mol-%, bezogen auf die Summe der Comonomeren des Glycidylmethacrylat-Copolymeren, Acryl-, Malein- oder Fumarsäureester der vorgenannten Alkohole enthalten. In diesem Falle muß mit erhöhter Amidbildung bei der Umsetzung mit dem Polyamin gerechnet werden, so daß man mit einem höheren Überschuß an Polyamin und/oder mit einem niedrigeren Festkörpergehalt in der Reaktionsmischung arbeiten sollte.

Die Polymerisation des glycidylmethacrylathaltigen Monomerengemisches erfolgt nach üblichen Verfahren; besonders geeignet ist die radikalische Polymerisation mit aliphatischen Azoverbindungen.

Geeignete Polyamine sind z.B. aliphatische primäre oder sekundäre Diamine mit 2 bis 6 C-Atomen wie Ethylendiamin, die verschiedenen Diaminopropane, -butane, -pentane und -hexane, die Monomethylverbindungen des Ethylen- und des Propylendiamins, Aminoether mit 2 Aminogruppen im Molekül wie Diaminodiethylether, Polyamine wie Diethylentriamin, Dipropylentriamin und andere. Besonders geeignet sind solche Polyamine, die mehr als 2, vorzugsweise mehr als 3 NH-Bindungen im Molekül besitzen.

Der Aufbau der erhaltenen Aminogruppen tragenden Kunstharze und deren Eigenschaften können in weitem Umfang variiert werden, z.B. durch

- das Verhältnis der "harten" und "weichen" Molekülsegmente in den Epoxidgruppen tragenden Verbindungen
- das Molgewicht der Epoxidgruppen tragenden Verbindungen
- deren Gehalt an Epoxidgruppen
- die Auswahl der Polyamine.

Bei Glycidylmethacrylatcopolymeren wird das Verhältnis der "harten" und "weichen" Segmente im Molekül durch die bei der Copolymerherstellung eingesetzten "harten" und "weichen" Monomeren bestimmt.

Als weiche Monomere werden solche bezeichnet, die das Aminogruppen tragende Polymerisatharz weich machen, und als harte solche, die das Polymerisatharz hart machen. Geeignete weiche Monomere sind z.B. die Methacrylester von $C_4$-$C_8$-Alkoholen, wie Butylmethacrylat, 2-Ethylhexylmethacrylat; als harte Monomere kommen z.B. Styrol und/oder die verschiedenen Vinyltoluole und/oder Methylmethacrylat in Betracht.

Über den Anteil an Glycidylmethacrylat im Copolymeren bzw. den Epoxidgruppengehalt in Epoxidharzen auf Basis von Polyphenolen und Epihalogenhydrin und die Auswahl der zur Umsetzung verwendeten Polyamine kann der Gehalt an basischen Stickstoffatomen und NH-Bindungen im Kunstharz eingestellt werden. Ein hoher Anteil an NH-Bindungen im erfindungsgemäß hergestellten, Aminogruppen tragenden Harz wird z.B. beim Einsatz von Diaminen wie Ethylen- und Propylendiamin erreicht. Die Anzahl der NH-Bindungen im Kunstharz und dessen Molekulargewicht beeinflussen wesentlich den Härtungsverlauf und die Vernetzungsdichte. Der Gehalt an basischen Stickstoffatomen im Aminogruppen

tragenden Harz ist für dessen Wasserlöslichkeit bzw. dessen emulgierend wirkenden Eigenschaften nach Zugabe von Säure von Bedeutung.

Die erfindungsgemäß hergestellten Kunstharze mit NH-Bindungen lassen sich über ihre Aminogruppen, gegebenenfalls auch über ihre Hydroxylgruppen, mit Harzen und/oder anderen Verbindungen, die funktionelle Gruppen tragen, umsetzen und so härten bzw. modifizieren. Genannt seien z.B.

- Epoxidverbindungen und/oder Epoxidharze,
- Verbindungen und/oder Harze, die zur Michael-Addition befähigte Doppelbindungen tragen,
- Isocyanate und/oder Isocyanatgruppen tragende Harze, auch in Form von Verkappungsprodukten,
- Aminoharze, z.B. Harnstoff- und Melaminharze,
- Verbindungen und/oder Harze, die zur Amid- und/oder Imidbildung befähigte Carbonsäure-, und/oder Carbonsäureester- und/oder Carbonsäureanhydridgruppen enthalten.

Dabei kann es auch zweckmäßig sein, mehrere Harze oder Verbindungen mit den erfindungsgemäß hergestellten Kunstharzen mit NH-Bindungen zu kombinieren, um verbesserte anwendungstechnische Eigenschaften zu erzielen.

Die Reaktionsfähigkeit der erfindungsgemäß hergestellten Aminogruppen tragenden Harze kann genutzt werden

1. zur Selbstvernetzung
2. zur Härtung des Aminogruppen tragenden Harzes mit einem oder mehreren Kombinationspartnern,
3. zur Modifikation des Kunstharzes mit NH-Bindungen.

Zu 1) Die Selbstvernetzung der erfindungsgemäß hergestellten Aminogruppen tragenden Harze auf Basis Polyphenol und Epihalogenhydrin tritt erst bei Temperaturen von über 180°C mit ausreichender Geschwindigkeit ein.

Die nur mit Methacrylestern hergestellten Polymerisatharze härten bei Temperaturen von über 150°C. Um zu Produkten zu gelangen, die unter 150°C selbst härten, kann man in erfindungsgemäß hergestellte, Aminogruppen tragende Polymerisatharze gezielt funktionelle Gruppen einbauen, die mit den Aminogruppen bei niedrigeren Temperaturen reagieren. Eine Möglichkeit besteht im Einbau von relativ reaktiven Estergruppen in das Polymerisat, das sind solche Estergruppen, die leichter als die der eingebauten Methacrylsäureester verseift werden, z.B. durch die Mitverwendung von Maleinsäure- oder Acrylsäureester bei der Herstellung des Glycidylmethacrylatcopolymeren. Bei der Umsetzung solcher Glycidylmethacrylatcopolymerer mit Polyaminen müssen naturgemäß niedrige Reaktions- und Destillations-Temperaturen und ein niedriger Festkörpergehalt in der Reaktionsmischung gewählt werden, damit eine vorzeitige Vernetzung bei der Herstellung der Aminogruppen tragenden Polymerisatharze vermieden wird. Unterhalb 150°C selbst vernetzende, erfindungsgemäß hergestellte Kunstharze mit NH-Bindungen erhält man auch dann, wenn die Reaktion zwischen dem Polyamin und der polyfunktionellen Epoxidgruppen tragenden Verbindung nicht zu Ende geführt wird, so daß das Aminogruppen tragende Harz noch Glycidylgruppen enthält. In diesem Fall ist es notwendig, die Umsetzung der polyfunktionellen Epoxidgruppen tragenden Verbindung in einem besonders niedrigen Temperaturbereich, z.B. bei 50 bis 70°C, mit einem flüchtigen Polyamin im Überschuß auszuführen und den Überschuß an Polyamin bei Temperaturen unterhalb 50°C unter vermindertem Druck erfindungsgemäß zu entfernen.

Zu 2) Aminogruppen tragende Harze mit restlichen Glycidylgruppen bzw. mit relativ reaktiven Estergruppen haben eine begrenzte Lagerstabilität. Für den Aufbau lagerstabiler Kunstharze ist die vollständige Umsetzung der Glycidylgruppen mit dem Polyamin und die Verwendung von Epoxidverbindungen, die keine bzw. nur nicht leicht verseifbare Gruppen enthalten, erforderlich. Mit solchen erfindungsgemäß hergestellten, lagerstabilen Harzen mit NH-Bindungen kann man, abhängig von der Reaktivität des Kombinationspartners, ZweiKomponenten-Systeme formulieren, die schon bei Raumtemperatur oder darunter, z.B. bis -20°C, härten. Man kann aber auch Einkomponenten-Systeme mit weniger reaktiven Kombinationspartnern formulieren, die bei höheren Temperaturen, z.B. bis 200°C, vorzugsweise bis 150°C härten.

Zu 3) Die erfindungsgemäß hergestellten Harze mit NH-Bindungen können weiter zu noch härtbaren Produkten modifiziert werden, indem man ihre funktionellen Gruppen, insbesondere die Aminogruppen, mit geeigneten Reaktionspartnern, insbesondere mit solchen, die die oben genannten funktionellen Gruppen enthalten, so zu Präkondensaten umsetzt, daß diese noch reaktive Gruppen enthalten, die die Selbsthärtbarkeit oder Fremdhärtbarkeit gewährleisten.

Bei der Härtung der vorgenannten Systeme und Präkondensate können Katalysatoren eingesetzt werden, die auf das jeweilige System in fachmännischer Weise abgestimmt sind. Z.B. sind für Systeme aus erfindungsgemäß hergestellten Harzen mit NH-Bindungen und Epoxidharzen Säuren wie Salicylsäure, tertiäre Amine oder Aminophenole wie Dimethylaminophenol geeignet.

Im folgenden sind beispielhaft Harze und Verbindungen mit funktionellen Gruppen zur Härtung bzw. Modifikation der erfindungsgemäß hergestellten Aminogruppen tragenden Polymerisatharze aufgeführt:

- Epoxidverbindungen. Hierzu gehören aliphatische Polyepoxidverbindungen wie epoxidierte Öle, z.B. epoxidiertes Leinöl oder epoxidiertes Sojaöl, epoxidierte cyclische Verbindungen z.B. Vinylcyclohexendiepoxid, Glycidyläther von hydriertem Bisphenol A, 3,4-Epoxycyclohexylmethyl-3,4-epoxycyclohexancarboxylat, Epoxidharze auf Basis von

Epichlorhydrin und mehrwertigen Alkoholen z.B. auf Basis von Pentaerythrit, Trimethylolpropan oder Sorbit, Glycidylester von aliphatischen Polycarbonsäuren.

Weiterhin sind hier aromatische Epoxidharze zu nennen, wie Polyglycidyläther von mehrwertigen Phenolen, z.B. Glycidyläther des 4,4'-Diphenylolmethans oder -propans oder Polyglycidyläther von Novolaken, Glycidylester von aromatischen Polycarbonsäuren, z.B. Terephtalsäurediglycidylester, oder Glycidylmethacrylatcopolymere von aromatischen Monomeren. Hiervon zeichnen sich Kombinationen der erfindungsgemäß hergestellten Aminogruppen tragenden Harze mit Polyglycidyläthern von mehrwertigen Phenolen wie (R)Beckopox EP 140, EP 301, EP 304 der Hoechst AG (Glycidyläther auf Basis von Bisphenol A mit Epoxydäquivalentgewichten von 190, 490 bzw. 900) durch besondere Reaktivität aus, so daß eine Härtung im Temperaturbereich von 20 - 80°C möglich ist;

- Verbindungen oder Harze, die zur Michael-Addition befähigte Doppelbindungen tragen. Als solche kommen z.B. in Frage Acryl- und/oder Methacrylsäureester von mehrwertigen Alkoholen, wie Trimethyloläthan- oder Trimethylolpropantriacrylat und/oder die entsprechenden Methacrylsäureester, Butandioldiacrylat und/oder ungesättigte Polyester auf Basis von Fumar- und/oder Maleinsäure. Diese Polyester können in der Carbonsäurekomponente zusätzlich bis zu 70 %, vorzugsweise bis zu 30 % gesättigte mindestens zweibasische Carbonsäureeinheiten enthalten, welche keine zur Michael-Addition befähigten Doppelbindungen enthalten, wie Ortho-, Iso- oder Terephthalsäure, Tetrahydrophthalsäure, Hexahydrophthalsäure, Adipinsäure. Anstelle von Säuren kann man bei der Herstellung der Polyester natürlich auch von den entsprechenden Anhydriden ausgehen. Als Alkohole kommen für die Herstellung der ungesättigten Polyester vorzugsweise Diole wie Ethylenglykol, 1,2- und 1,3-Propandiol, Diethylenglykol und/oder Dipropylenglykol in Betracht. Besonders reaktiv sind Kombinationen aus erfindungsgemäßen Polymerisatharzen mit mindestens trifunktionellen Acrylestern wie Glycerin, Trimethylolethan- bzw. -propantriacrylat, Pentaerythrittetracrylat. Solche Kombinationen härten auch unterhalb Raumtemperatur sehr schnell;

- Isocyanatverbindungen. Als solche eignen sich aliphatische, cycloaliphatische, araliphatische, aromatische, und/oder heterocyclische Mono- und Polyisocyanate, z.B. (R)Desmodur N (Handelsname für ein Polyisocyanat auf Basis von Hexamethylendiisocyanat), Isophorondiisocyanat, Toluylendiisocyanate, Diphenylmethandiisocyanat. Kombinationen mit Polyisocyanaten oder Isocyanatgruppen tragenden Harzen vernetzen selbst bei Temperaturen unter 0°C sehr schnell. Deshalb reichen schon kleine Mengen, z.B. bis zu 30 %, vorzugsweise 1 bis 20 % der erfindungsgemäß hergestellten Polymerisatharze mit NH-Bindungen aus, um Hydroxylgruppen tragende Polymerisatharze, wie Acrylatharze, in Gegenwart von Polyisocyanaten bei Raumtemperatur zu härten;

- Verkappte Isocyanate. Für Kombinationen mit verkappten Polyisocyanaten können die im vorangegangenen Absatz genannten Polyisocyanate und/oder Isocyanatgruppen tragenden Harze mit üblichen Verkappungsmitteln wie Phenolen, Alkoholen, Malonsäureestern, Acetessigsäureestern, ε-Caprolactam verwendet werden. Diese Kombinationen sind bei Raumtemperatur stabil und härten im allgemeinen erst bei Temperaturen oberhalb 100°C. In besonderen Fällen, z.B. bei Verwendung von Acetessigsäureestern zur Verkappung, kann auch bereits unter 100°C eine Vernetzung eintreten;

- Aminharze. Als Aminharze kommen z.B. handelsübliche Harnstoff- und Melaminharze in Betracht. Die Härtungstemperatur solcher Kombinationen ist vom Aufbau der Harnstoff- und Melaminharze abhängig. So härten z.B. Kombinationen mit Melaminharzen von der Art des Hexamethoxymethylmelamins erst bei Temperaturen oberhalb 150°C, während Kombinationen mit reaktiveren Melaminharzen, die mit weniger Formaldehyd hergestellt und/oder mit sekundären bzw. tertiären Alkoholen veräthert sind, bereits unterhalb 100°C vernetzen;

- Carbonsäure-, Carbonsäureester-, Carbonsäureanhydrid-Harze. Kombiniert man die erfindungsgemäß hergestellten Aminogruppen tragenden Harze mit Verbindungen oder Harzen, die Carbonsäure- und/oder Carbonsäureester- und/oder Carbonsäureanhydridgruppen enthalten, so tritt Carbonsäureamid- oder -imidbildung ein. Derartige Reaktionen erfolgen z.B. mit gesättigten Alkydharzen wie solchen auf Basis von Isononansäure, Phthalsäureanhydrid und Trimethylolpropan, da diese Harze neben den Estergruppen auch Carboxylgruppen enthalten. Die Härtungstemperatur hängt von der Reaktivität der im Kombinationspartner enthaltenen Carbonsäure-, Carbonsäureester- oder Carbonsäureanhydridgruppen ab. So gelingt es z.B. mit polyfunktionellen Verbindungen oder Harzen, die reaktive Carbonsäureesterbindungen der Malonsäure oder der Acetessigsäure tragen, zu erfindungsgemäßen Kombinationen zu gelangen, die bereits bei 80 - 140°C mit den aminogruppenhaltigen Harzen vernetzen und die Bildung von Formkörpern ermöglichen, während die Vernetzungstemperatur von Kombinationen mit den genannten gesättigten Alkydharzen, vorzugsweise über 150°C liegt.

Zur Überwindung von Verträglichkeitsproblemen oder zur Einführung von "harten" oder "weichen" Molekülsegmenten kann es zweckmäßig sein, das erfindungsgemäß hergestellte Aminogruppen tragende Harz mit einem der obengenannten Kombinationspartner zu präkondensieren und gegebenenfalls das erhaltene Präkondensat mit weiteren der oben genannten Reaktionspartner zu kombinieren. Bei der Verwendung von Estern lufttrocknender Fettsäuren wie Sojaöl- oder Leinölfettsäure führt man die Präkondensation, das ist die zwischen den Aminogruppen des erfindungsgemäß hergestellten Harzes und den Ester- bzw. Carbonsäuregruppen bei über 100°C ablaufende Amid- oder Imidbildungsreaktion, zweckmäßig unter Luftausschluß durch. Die so als Präkondensate erhaltenen Kombinationen härten dann in ähnlicher Weise wie lufttrocknende Alkydharze mit Luftsauerstoff bei Raumtemperatur, zeichnen sich jedoch gegenüber diesen durch verbesserte Antrocknung bei guter Durchtrocknung aus, wenn

das erfindungsgemäß erhaltene Harz mit NH-Bindungen auf Basis eines geeigneten "hart" eingestellten Glycidylmethacrylatcopolymeren hergestellt wird. Als Ester lufttrocknender Fettsäuren kommen dabei solche von einwertigen Alkoholen, z.B. des Methanols, oder mehrwertigen Alkoholen, auch solchen Produkten in Frage, in denen ein Teil der Hydroxylgruppen des mehrwertigen Alkohols mit gesättigten Carbonsäuren verestert ist, wie in langöligen Alkydharzen mit Phthalsäure.

Die erfindungsgemäßen Kombinationen lassen sich bei entsprechender Auswahl der erfindungsgemäß hergestellten Aminogruppen tragenden Harze und der Kombinationspartner in einem breiten Bereich zu Formkörpern, insbesondere zu flächenförmigen, wie Überzügen, aber auch Klebschichten und Verfugungen mit erwünschten Eigenschaften, wie einer guten Lösungsmittel- und Wetterbeständigkeit, härten. Die Anwendung der erfindungsgemäß hergestellten Harze bzw. der daraus erhaltenen Kombinationen und/oder Modifikationen zur Herstellung von Formkörpern kann aus Lösung in organischen Lösungsmitteln oder nach Säurezugabe aus wäßrigen Systemen, das sind Lösungen in Wasser enthaltenden Lösungsmitteln oder Dispersionen, erfolgen. Auch eine Anwendung als Festharz, z.B. als Bindemittel für Pulverlacke, ist möglich.

Besonders geeignet sind die erfindungsgemäß hergestellten Harze mit NH-Bindungen für die Verarbeitung aus wäßriger Lösung oder wäßriger Dispersion, da durch Zugabe von Säure, insbesondere Carbonsäure, durch die Bildung von kationischen Gruppen die Wasserlöslichkeit, Wasserdispergierbarkeit und das Emulgiervermögen für hydrophobe Kombinationspartner der erfindungsgemäßen Bindemittel erreichbar sind. Bei der Herstellung von Überzügen aus diesen wäßrigen Dispersionen bzw. wäßrigen Lösungen können übliche Verfahren wie die Kataphorese zur Anwendung gelangen.

Hervorzuheben ist daher die Verwendung der erfindungsgemäß hergestellten Harze oder Verbindungen, die nach der Protonisierung wasserlöslich geworden sind, als Emulgatoren und/oder Schutzkolloide für wäßrig-kationische Polymerisatdispersionen. Zur Herstellung solcher Dispersionen polymerisiert man Monomere oder Gemische davon in wäßriger Lösung der erfindungsgemäß erhaltenen Harze oder Verbindungen in protonisierter Form mit bekannten wasserlöslichen radikalspendenden Katalysatorsystemen, z.B. solchen auf Ammoniumpersulfatbasis. Als Monomere werden beispielsweise eingesetzt Vinylester wie Vinyl-acetat, -propionat, -versatat, Acrylester wie Acrylsäure-methylester,-ethylester, -hydroxyethylester, -butylester, -2-ethylhexylester, Methacrylester wie Methacrylsäure-methylester, -ethylester, -butylester, -2-ethylhexylester, -hydroxylethylester, Styrole wie Styrol, α-Methylstyrol und Vinyltoluol, die Dimethyl-, Dibutyl- und Di-2-ethylhexylester der Malein- und Fumarsäure, Acryl- und Methacryl-amid und deren Derivate.

Die gewünschten Eigenschaften in bezug auf Wasserlöslichkeit und Emulgiervermögen nach Säurezugabe lassen sich durch Variation des Gehaltes und der Art an basischen Stickstoffatomen und gegebenenfalls auch durch Einführung weiterer hydrohiler Gruppen, z.B. Hydroxylgruppen und/oder Carbonsäureamidgruppen durch Mitverwendung von Hydroxyethylmethacrylat und/oder Methacrylsäureamid bei der Herstellung der Glycidylmethacrylatcopolymeren, einstellen. So ist es möglich, das gewünschte Verhältnis zwischen hydrophilen und hydrophoben Teilen, d.h. die HLB-Werte der erfindungsgemäß hergestellten Produkte, festzulegen. Mit auf diese Weise optimierten Produkten gelingt es nach Säurezugabe, ohne den Einsatz von niedermolekularen Emulgatoren lagerstabile wäßrige Lösungen oder wäßrige Dispersionen aus den erfindungsgemäß hergestellten Harzen mit NH-Bindungen allein oder deren Kombinationen mit hydrophoben Kombinationspartnern herzustellen.

Da bei den erfindungsgemäß erhaltenen Produkten auch ihr Verträglichkeitsverhalten mit den in den kationischen wäßrigen Dispersionen enthaltenen Polymerisaten über die Monomere im Glycidylmethacrylat-Copolymeren und dessen Molekulargewicht bzw. über die Struktur und das Molekulargewicht des Epoxidharzes auf Polyphenolbasis beeinflußt werden kann, lassen sich mit dem erfindungsgemäßen Verfahren für kationische wäßrige Polymerisatdispersionen Emulgatoren und Schutzkolloide nach Maß herstellen, die sich außerdem über die NH-Bindungen vernetzen lassen.

Bei der Protonisierung von in Wasser nicht mischbaren organischen Lösemitteln gelösten Kunstharzen kann das organische Lösemittel zunächst abdestilliert oder destillativ gegen ein höher siedendes mit Wasser mischbares Lösemittel ausgetauscht werden. Für die bevorzugte Verwendung der erfindungsgemäß hergestellten Produkte führt man die Protonisierung in der Lösung des nicht mit Wasser mischbaren Lösemittels gegebenenfalls nach Zusatz von Wasser mischbaren Lösemitteln durch und entfernt das organische Lösemittel nach der Protonisierung durch Wasserdampfdestillation vollständig. Durch die Auswahl der Lösemittel, die flüchtig und nicht Wasser mischbar sind, ist es außerdem möglich, diese nahezu vollständig in wieder verwendbarer Qualität zurückzugewinnen, d.h. sie sind nicht mit Aminen verunreinigt.

Die Protonisierung der erfindungsgemäß hergestellten Kunstharze mit NH-Bindungen kann in bekannter Weise erfolgen. Als Säurekomponenten eignen sich beispielsweise Ameisensäure, Essigsäure, Glycolsäure, Milchsäure, Gluconsäure u.a. Bei der Protonisierung ist zumindest die zeitweilige Bildung einer klaren Lösung anzustreben.

Durch Variation der hydrophilen und hydrophoben Anteile im erfindungsgemäß hergestellten Aminogruppen tragenden Harz

kann auch das Viskositätsverhalten bei Verdünnung der angesäuerten wäßrigen Lösung und/oder Dispersion beeinflußt werden.

Die erfindungsgemäß hergestellten Bindemittel können ohne und mit Pigmenten und/oder Füllstoffen zu Formkörpern, insbesondere flächenförmigen, verarbeitet werden. Bei der Auswahl der Pigmente und Füllstoffe muß man der jeweils vorgesehenen Verarbeitung der Bindemittel-Pigment-Füllstoff-Zusammensetzung Rechnung tragen. Werden die erfindungsgemäß verwendeten Bindemittel z.B. als wäßrige Lösung oder Dispersion eingesetzt, bei denen die Aminogruppen als Kationen vorliegen, so dürfen naturgemäß alkalische Pigmente oder Füllstoffe wie Zinkoxid, Calciumcarbonat nicht eingesetzt werden. Saure Pigmente oder Füllstoffe können durch Salzbildung bzw. Überführung der basischen Stickstoffgruppen in Kationen bestimmte Vernetzungsreaktionen beeinflussen, wie die Reaktion mit Doppelbindungen, die zur Michael-Addition befähigt sind.

Natürlich können in allen Fällen statt einheitlicher Produkte auch Gemische eingesetzt werden, also z.B. bei der Umsetzung der Copolymeren auch Gemische von Polyaminen und/oder Gemische von mehreren Glycidylmethacrylat-Copolymeren bzw. Gemische von mehreren Epoxidharzen auf Polyphenol/Epichlorhydrinbasis.

In den Beispielen beziehen sich Teile (T) und % auf das Gewicht. Die Aminzahlen sind stets auf den Festkörper bezogen.

Der Gehalt an freien Polyaminen wurde wie folgt bestimmt:

a) Ethylendiamin in Polymerlösungen: 40 g der Harzlösung wurden zweimal mit 80 g Wasser eine halbe Stunde geschüttelt und die abgetrennten wäßrigen Phasen vereint und klar filtriert. Dann wurde mit Salzsäure auf pH 2 gestellt und

im Dünnschichtverdampfer im Vakuum bei 40°C zur Trockne eingedampft. Der Rückstand wurde mit Methanol aufgenommen und mit alkoholischer KOH auf pH 9 gestellt. Ein aliquoter Teil dieser Lösung wurde im Vergleich mit verdünnten Ethylendiamin-Lösungen im Gaschromatographen bestimmt.

b) Ethylendiamin, Diethylentriamin und Triethylentetramin in festen Harzen: 25 bis 30 g fein gemahlenes Festharz wurden mit 50 ml destilliertem Wasser 2 h kalt verrührt und das Festharz durch Zentrifugieren vom wäßrigen Extrakt abgetrennt. Einwaagen von 10 g des wäßrigen Extraktes wurden mit 0,1 n wäßriger Säure titriert.

Beispiele:

1. Polyamin-Umsetzungsprodukte von Polyphenolglycidylethern

1.1a In eine Lösung von 1600 T Beckopox EP 307 der Fa. Hoechst AG (Epoxidfestharz auf Bisphenol A-Basis, Epoxidäquivalent 1550 bis 2000) in 1067 T Toluol wurden bei Raumtemperatur unter Rühren innerhalb von 5 min 144 T Ethylendiamin eingetragen (NH/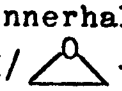-Verhältnis 10,8 : 1). Die homogene Lösung wurde 5 Stunden auf Rückflußtemperatur gehalten und dann eine Kreislaufdestillation mit Abscheider eingerichtet. (Falls sich das überschüssig angewandte Ethylendiamin im Abscheider nicht von der Toluolphase trennt, gibt man wenig Wasser pro Stunde in das Reaktionsgefäß bis Trennung zwischen Ethylendiamin und Toluol-Phase im Abscheider erfolgt). Als bei der weiteren Kreislaufdestillation die Ethylendiamin-Phase im Abscheider, die wenig Wasser enthielt, nicht mehr zunahm, wurde diese untere Ethylendiamin-Schicht abgetrennt, die Temperatur im Reaktionsgefäß gemessen und 300 T Wasser pro Stunde zu der Reaktionsmischung dosiert, wobei diese kräftig gerührt und beheizt wurde, um die Temperatur nicht mehr als 10 bis 12°C unter die vor der Wasserzugabe gemessene Temperatur abfallen zu lassen. Die Kreislaufdestillation wurde beendet, als bei Unterbrechung der Wasser-Zugabe nach vollständiger Entfernung des Wassers aus dem Reaktionsgefäß

und dem Abscheider 100 g des Toluol-Destillats weniger als 0,4 ml 0,1 n methanolische Salzsäure verbrauchten. Erhaltenes Produkt: 39 % Festkörper, Aminzahl auf Festharz bezogen 48, Gehalt an freiem Ethylendiamin 9 ppm.

1.1b Zur Überführung des Produktes aus 1.1a in eine wäßrige Dispersion wurden 50 T der auf 100°C erwärmten Harz-Toluollösung mit 50 T Diethylenglykol-dimethylether und 1,77 T Ameisensäure versetzt. Diese Mischung ergab beim Erwärmen auf 100 bis 110°C nach ca. 5 min eine klare Lösung, die danach wieder trüb wurde. Diese Mischung wurde in 150 T Wasser von 90 bis 95°C eindosiert und das Toluol als Wasser-Azeotrop-Gemisch unter atmosphärischem Druck abdestilliert.

Die erhaltene wäßrige Dispersion hatte folgende Eigenschaften: Harzgehalt 16,6 %, Teilchengröße (Gewichtsmittelwert) bei Messung mit Nanosizer 155 nm bzw. mit Aerosolspektrograph 143 nm, Teilchendispersität 4,5, kein Absetzen bei 4 Wochen Lagerung.

1.2 Es wurde nach Beispiel 1.1a gearbeitet und als Löse- bzw. Schleppmittel nicht Toluol, sondern Xylol eingesetzt. Außerdem wurde die Kreislaufdestillation unter vermindertem Druck durchgeführt, so daß die Temperatur der Reaktionsmischung nach Entfernung der Hauptmenge des Ethylendiamin-Überschusses vor Beginn der Wassserzugabe 80°C betrug. Die Wasser- und Wärmezufuhr zur Reaktionsmischung wurde so gesteuert, daß einmal die Temperatur um 7 bis 13°C auf 73 bis 67°C (Beispiel 1.2a) und zum anderen um 20 bis 25°C auf 60 bis 55°C (Beispiel 1.2b) abfiel. Das im Abscheider gesammelte Wasser hatte im Beispiel 1.2a (335 T Wasserdestillat) eine Aminzahl von 118 mg KOH/g und im Beispiel 1.2b (394 T Wasserdestillat) eine Aminzahl von 78. In beiden Beispielen, 1.2a und 1.2b, wurde die Kreislaufdestillation so lange fortgesetzt, bis bei Unterbrechung der Wasserzugabe nach vollständiger Entfernung des Wassers

aus dem Reaktionsgefäß und dem Abscheider 100 g Xyloldestillat 9 ml 0,1 n methanolische Salzsäure verbrauchten. Die erhaltenen Endprodukte wiesen in beiden Fällen die folgenden gleichen Daten auf: Festkörper 42 %, Aminzahl auf Festharz bezogen 48 mg KOH/g, Gehalt an freiem Ethylendiamin 40 ppm. Der Vergleich von Beispiel 1.2a und 1.2b zeigt, daß die Entfernung des überschüssig angewandten Diamins dadurch beschleunigt werden kann, daß der Temperaturabfall im Reaktionsgefäß bei der Wasserzugabe während der Kreislaufdestillation möglichst kleiner als 15°C gehalten wird.

1.3 Zu einer Lösung von 770 T Beckopox VEP 2303 der Fa. Hoechst AG (Epoxidfestharz auf Bisphenol A-Basis, Epoxidäquivalentgewicht 750 bis 830) in 700 T Solvesso 200 wurden bei Raumtemperatur unter Rühren innerhalb von 5 min 300 T Diethylentriamin (NH/ 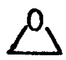 -Verhältnis 15,2 : 1) gegeben, dann die Lösung 5 Stunden auf 120°C gehalten und unter vermindertem Druck eine Kreislaufdestillation eingerichtet. Bei konstantem Druck von 120 Torr und lebhafter Kreislaufdestillation hatte die Reaktionsmischung eine Temperatur von 160°C. Anschließend wurde unter kräftigem Rühren tropfenweise Wasser zugegeben, wobei die Temperatur der Reaktionsmischung um ca. 3°C absank und sich im Abscheider eine wäßrige Aminphase abtrennte. Nach Zugabe von 500 T Wasser in 10 Stunden wurde ein Produkt mit 40 % Festkörper erhalten, das bei 60°C blank war und 40 ppm freies Diethylentriamin enthielt.

2. Polyamin-Umsetzungsprodukte von Glycidylmethacrylat-Copolymeren

2.1 Zu 1200 T einer Glycidylmethacrylat-Copolymerlösung mit einem Harzgehalt von 60 % - hergestellt durch Lösungspolymerisation von 216 T Glycidylmethacrylat, 1296 T n-Butylmethacrylat, 540 T Styrol, 108 T Methylmethacrylat mit 108 T Azodiisobtuyronitril in Xylol bei 80 bis 100°C - wurden bei Raumtemperatur 183 T Ethylendiamin gegeben und die homogene Lösung 10 Stunden unter Rühren bei 60°C gehalten. Dann wurde bei 25 Torr eine Kreislaufdestillation eingerichtet. Dabei stellte sich die Temperatur der Reaktionsmischung auf 51°C ein. Als die Zugabe von wenigen Tropfen Wasser keine Vermehrung der unteren Ethylendiamin-Phase im Abscheider mehr verursachte, wurde die untere Phase, die aus fast reinem Ethylendiamin bestand, abgetrennt und mit der Dosierung von 130 T Wasser pro Stunde begonnen. Dabei wurde die Reaktionsmischung, deren Temperatur um ca. 10°C auf 40°C abfiel, kräftig geheizt und gerührt. Nach Durchsatz von 500 T Wasser wurde eine Xylol-Lösung mit 53,4 % Harzfestkörper, einem Gehalt an freiem ungebundenem Ethylendiamin von weniger als 30 ppm und einer Jodfarbzahl von 1 erhalten, die keinen Amingeruch aufwies. Das in Xylol gelöste amingruppenhaltige Acrylatharz besaß eine Aminzahl von 64 mg KOH/g.

3. Vergleichsbeispiele

3.1 Entsprechend den Angaben des Beispieles 1 der DE-OS 27 37 375 wurden 385 T Beckopox VEP 2303 in 600 T Triethylentetramin unter Rühren bei 70°C in 2 Stunden gelöst und unter einem Druck von 15 Torr auf 260°C geheizt. Nach dem Abdestillieren des überschüssigen Triethylentetramins wurde noch eine Stunde bei 260°C unter 15 Torr Vakuum (Produkt I) und eine weitere Stunde unter 1 Torr Vakuum (Produkt II) gehalten. Die so erhaltenen Produkte enthielten über 25000 ppm freies Triethylentetramin (Produkt I) bzw. über 10000 ppm freies Triethylentetramin (Produkt II).

3.2 438 T Beckopox VEP 2303 wurden in 561 T Diethylentriamin unter Rühren bei 70°C in 2 Stunden gelöst und unter einem Druck von 15 Torr auf 260°C geheizt. Nachdem überschüssiges Diethylentriamin abdestilliert war, wurde noch eine Stunde bei 260°C unter 15 Torr (Produkt I) und eine weitere Stunde unter 1 Torr (Produkt II) gehalten. Produkt I enthielt noch 20000 ppm, Produkt II noch 3500 ppm freies Diethylentriamin.

3.3 Entsprechend den Angaben des Beispiels 2.2.1 der De-OS 34 12 657 wurden 190 T Glycidylmethacrylat-Copolymer-Lösung mit einem Harzgehalt von 52,6 % und einer Epoxidzahl von 1,248, bezogen auf Festharz - hergestellt durch Lösungspolymerisation von 96 T Glycidylmethacrylat, 704 T Styrol und 14,4 T Ditert.-butylperoxid in Xylol bei 134° bis 140°C - mit 31 T Äthylendiamin, 30 T Tetrahydrofuran und 15 T Diethylenglykoldimethyläther bei Raumtemperatur zu einer homogenen Lösung vereinigt, dann 15 Stunden am Rückfluß gekocht und überschüssiges Diamin mit Lösungsmittel abdestilliert, wobei die abdestillierte Volumenmenge durch Xylol ersetzt wurde. Die Destillation wurde abgebrochen, als das Destillat frei von Amin war, d.h. der Verbrauch an 0,1 n HCl weniger als 100 ml bei 100 g Destillateinwaage betrug. Das erhaltene Produkt hatte einen Festkörpergehalt von 54,4 % und eine Aminzahl von 81,6 mg KOH-Äquivalenten/g Festharz. Bei der Entfernung des überschüssigen Diamins fielen 1500 T mit Ethylendiamin verunreinigtes Xylol an.

Patentansprüche:

1. Verfahren zur Herstellung von löslichen, von monomeren Aminen freien Kunstharzen mit NH-Bindungen durch Umsetzung von A) epoxidgruppentragenden Verbindungen mit B) Polyaminen, dadurch gekennzeichnet, daß die Umsetzung in homogener Phase in Abwesenheit oder Gegenwart von Harzlösemitteln durchgeführt wird, wobei B) Polyamin im Überschuß eingesetzt wird und das erhaltene Reaktionsprodukt von den nicht umgesetzten Polyaminanteilen durch Kreislaufdestillation in Gegenwart eines Harzlösemittels unter Wasserzugabe und Wärmezufuhr befreit wird.

2. Verfahren nach Anspruch 1, dadurch gekennzeichnet, daß das Harzlösemittel nach der Umsetzung der Komponenten A) und B) zugesetzt wird.

3. Verfahren nach Anspruch 1 oder 2, dadurch gekennzeichnet, daß die Komponente B) in einem solchen Überschuß eingesetzt wird, daß das Verhältnis der NH-Bindungen in Komponente B) zu dem Glycidylgruppen 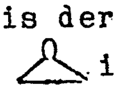 in Komponente A) 8 : 1, vorzugsweise 12 : 1 bis 36 : 1 beträgt.

4. Verfahren nach einem oder mehreren der Ansprüche 1 bis 3 dadurch gekennzeichnet, daß die Kreislaufdestillation solange durchgeführt wird, bis 100 g des wasserfrei abdestillierten Harzlösemittels 1 bis 50 ml 0,1 n Salzsäure verbrauchen und die Reaktionsprodukte einen Gehalt an monomerem Polyamin von unter 50 ppm aufweisen.

5. Verfahren nach einem oder mehreren der Ansprüche 1 bis 4, dadurch gekennzeichnet, daß die Zufuhr von Wasser und Wärmeenergie zur Kunstharzlösung so erfolgt, daß sich das Wasser im Destillationsgefäß nicht anreichert.

6. Verfahren nach einem oder mehreren der Ansprüche 1 bis 5, dadurch gekennzeichnet, daß als Polyamin Ethylendiamin und als Harzlösemittel ein solches mit einem Siedepunkt unter atmosphärischem Druck im Bereich von 140 bis 200°C eingesetzt werden.

7. Verfahren nach einem oder mehreren der Ansprüche 1 bis 6, dadurch gekennzeichnet, daß als epoxidgruppentragende Verbindung Epoxidharze, hergestellt aus Polyphenolen und Epihalogenhydrin, vorzugsweise Epichlorhydrin, eingesetzt werden.

8. Verfahren nach einem oder mehreren der Ansprüche 1 bis 6, dadurch gekennzeichnet, daß als epoxidgruppentragende Verbindung Glycidylmethacrylat-Copolymere mit Styrol, substituierten Styrolen und Methacrylsäureestern als Comonomeren eingesetzt werden.

9. Verfahren nach einem oder mehreren der Ansprüche 1 bis 8, dadurch gekennzeichnet, daß die epoxidgruppen-tragende Verbindung A) noch andere funktionelle Gruppen enthält.

10. Verwendung der nach einem oder mehreren der Ansprüche 1 bis 9 hergestellten Kunstharze als selbstvernetzende Bindemittel sowie in Kombination mit Vernetzern oder in modifizierter Form für Beschichtungen oder Imprägnierungen.

11. Verwendung nach Anspruch 10, dadurch gekennzeichnet, daß die Modifizierung in Form einer Protonisierung erfolgt, bei der die Aminogruppen des Kunstharzes mit Säuren unter Salzbildung umgesetzt werden.

12. Verwendung der protonisierten Verbindungen nach Anspruch 11 in wasserverdünnbaren Lackbindemitteln.

13. Verwendung der protonisierten Verbindungen nach den Ansprüchen 11 und 12 in kataphoretisch abscheidbaren Lackbindemitteln.